# FASCICULE DE BREVET EUROPEEN

(11) **EP 3 271 963 B1**
(45) Date de publication et mention de la délivrance du brevet: **21.11.2018**
(21) Numéro de dépôt: 16711883.5
(22) Date de dépôt: 14.03.2016
(51) Int. Cl.: H01M 10/0525, H01M 10/0567, H01M 10/0568, H01M 10/0569

(54) **FORMULATION D'ÉLECTROLYTE POUR BATTERIES LITHIUM-ION**
ELEKTROLYTFORMULIERUNG FÜR LITHIUMIONENBATTERIEN
ELECTROLYTE FORMULATION FOR LITHIUM-ION BATTERIES

(30) Priorité: 16.03.2015 FR 1552122
(43) Date de publication de la demande: 24.01.2018
(73) Titulaire: Arkema France, 92700 Colombes (FR)
(72) Inventeur: SCHMIDT, Grégory, 69700 Saint Andéol Le Château (FR)
(74) Mandataire: Chahine, Audrey Claire
(86) Numéro de dépôt international: PCT/FR2016/050559
(87) Numéro de publication internationale: WO 2016/146925

(56) Documents cités:
- CN-A- 103 401 021
- JP-A- H11 354 104
- JP-A- 2000 243 440
- US-A1- 2011 229 769
- US-A1- 2014 356 735
- L. NIEDZICKI ET AL: "New type of imidazole based salts designed specifically for lithium ion batteries", ELECTROCHIMICA ACTA, vol. 55, no. 4, 13 mai 2009 (2009-05-13), pages 1450-1454, XP026867410, ISSN: 0013-4686 [extrait le 2009-05-13]
- H.-B. HAN ET AL: "Lithium bis(fluorosulfonyl)imide (LiFSI) as conducting salt for nonaqueous liquid electrolytes for lithium-ion batteries: Physicochemical and electrochemical properties", JOURNAL OF POWER SOURCES, vol. 196, no. 7, 21 décembre 2010 (2010-12-21), pages 3623-3632, XP028129764, ISSN: 0378-7753, DOI: 10.1016/J.JPOWSOUR.2010.12.040 [extrait le 2010-12-21] cité dans la demande

## Description

### DOMAINE DE L'INVENTION

La présente invention concerne une formulation d'électrolyte basée sur un sel de lithium particulier, à savoir le bis(fluorosulfonyl)imide de lithium (LiFSI) et/ou le 2-trifluorométhyl-4,5-dicarbonitrile-imidazolate de lithium (LiTDI) en combinaison avec un solvant du type silane, ainsi que l'utilisation de cette formulation dans une batterie Li-ion.

### ARRIERE-PLAN TECHNIQUE

Une cellule élémentaire d'une batterie secondaire Li-ion (ou accumulateur au lithium) comporte une anode (à la décharge), généralement en lithium métallique ou à base de carbone, et une cathode (à la décharge), généralement en un composé d'insertion du lithium de type oxyde métallique tel que LiMn₂O₄, LiCoO₂ ou LiNiO₂. Entre l'anode et la cathode se trouve intercalé un électrolyte conducteur des ions lithium. Dans le cas de la cathode, l'oxyde métallique est généralement déposé sur un collecteur de courant en aluminium.

En utilisation, c'est-à-dire lors de la décharge de la batterie, le lithium relâché par oxydation au pôle (-) par l'anode sous forme ionique Li⁺, migre à travers l'électrolyte conducteur et vient s'insérer par une réaction de réduction dans le réseau cristallin du matériau actif de la cathode au pôle (+). Le passage de chaque ion Li⁺ dans le circuit interne de l'accumulateur est exactement compensé par le passage d'un électron dans le circuit externe, générant un courant électrique qui peut servir à alimenter divers appareils dans le domaine de l'électronique portable tels que des ordinateurs ou téléphones, ou dans le domaine des applications de plus grande densité de puissance et d'énergie, tels que les véhicules électriques.

L'électrolyte est constitué généralement d'un sel de lithium dissous dans un solvant, qui est généralement un mélange de carbonates organiques, offrant un bon compromis entre la viscosité et la constante diélectrique. Des additifs peuvent être ajoutés pour améliorer la stabilité des sels d'électrolyte.

Le sel actuellement le plus utilisé est le sel LiPF₆ ; mais il présente de nombreux désavantages tels qu'une stabilité thermique limitée, une instabilité à l'hydrolyse, et donc une plus faible sécurité de la batterie. En revanche, il présente l'avantage de former une couche de passivation sur l'aluminium et d'avoir une forte conductivité ionique.

D'autres sels, possédant le groupement FSO₂⁻, ont été proposés. Ils ont démontré de nombreux avantages, notamment une meilleure conductivité ionique et une résistance à l'hydrolyse. L'un de ces sels, le LiFSI (LiN(FSO₂)₂) a montré des propriétés très intéressantes qui font de lui un bon candidat pour remplacer le LiPF₆. Le LiFSI forme également une couche de passivation, mais plus lentement et de manière très sensible à la pureté du produit (voir H-B. Han, J. Power Sources 196, 3623-3632 (2011)).

Un autre sel a également été proposé, à savoir le LiTDI (ou 2-trifluorométhyl-4,5-dicarbonitrile-imidazolate de lithium). Ce sel présente l'avantage de posséder moins d'atomes de fluor et d'avoir des liaisons fortes carbone-fluor, ce qui permet de d'éviter ou de réduire la formation d'HF lors de la dégradation thermique ou électrochimique du sel. Le document WO 2010/023413 montre que ce sel présente une conductivité de l'ordre de 6 mS/cm, une très bonne dissociation entre l'anion imidazolate et le cation lithium d'où son utilisation en tant que sel d'électrolyte de batteries Li-ion. En revanche, le sel présente une forte capacité irréversible sans ajout d'additif pour la formation de l'interphase solide-électrolyte (SEI) sur le graphite.

Par ailleurs, le document US 2014/0356735 a montré l'intérêt de solvants silanes dans certains électrolytes. Le document illustre notamment que l'ajout du solvant dans un électrolyte basé sur certains sels tels que le LiPF₆ permet d'améliorer certaines performances de la batterie Li-ion.

Les documents CN 103 401 021 A, JP 2000 243440 A et JP H11 354104 A divulguent également des solutions d'électrolyte non-aqueux comprenant des solvants silanes portant des fonctions isocyanatoalkyl ou cyanoalkyl.

Le document US 2011/229769 A1 et l'article de L. Niedzicki et al. dans Electrochimica Acta, vol. 55, no. 4, 13 mai 2009, pages 1450-1454, décrivent l'utilisation de sels de lithium comprenant un anion pentacyclique de type imidazolate, tels que LiTDI, dans des compositions d'électrolyte non-aqueux pour batterie secondaire au lithium.

L'article de H.-B. Han et al. dans Journal of Power Sources, vol. 196, no. 7, 21 décembre 2010, pages 3623-3632, a trait à des solutions électrolytiques non-aqueuses à base de LiFSI comme sel conducteur et leur emploi dans des batteries Li-ion.

Il existe un besoin de fournir des électrolytes permettant d'améliorer encore les performances de la batterie Li-ion. Il existe plus particulièrement un besoin de fournir des électrolytes permettant de passiver (c'est-à-dire de protéger de la corrosion) la cathode. Il existe également un besoin de fournir des électrolytes permettant de diminuer la capacité irréversible de la batterie Li-ion.

### RESUME DE L'INVENTION

L'invention concerne en premier lieu une composition d'électrolyte, comprenant :
- un sel de bis(fluorosulfonyl)imide de lithium et/ou un sel de 2-trifluorométhyl-4,5-dicyano-imidazolate de lithium ; et
- un solvant de formule (I) : 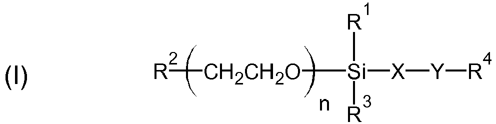 dans laquelle :
   - n est un nombre entier valant de 0 à 15,
   - R¹, R² et R³ représentent indépendamment un atome d'halogène ou un groupement alkyle linéaire ou ramifié en C1 à C6,
   - X représente soit une liaison covalente soit un groupement alkylène linéaire ou ramifié en C1 à C6, un groupement alcénylène linéaire ou ramifié en C2 à C6, ou un groupement alcynylène linéaire ou ramifié en C2 à C6,
   - Y représente soit un groupement -(OCH₂CH₂)ₘ-, soit un groupement -(N(CH₃)CH₂CH₂)ₘ-, m étant un entier valant de 0 à 15, sous réserve que m soit différent de 0 lorsque X représente une liaison covalente, et
   - R⁴ représente un groupement cyano, cyanate, isocyanate, thiocyanate ou isothiocyanate.

Selon un mode de réalisation, le solvant de formule (I) est plus précisément de formule (II) : 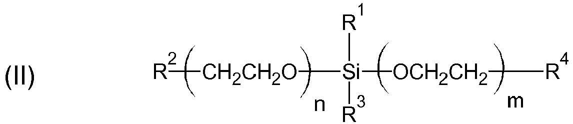 dans laquelle :
- n et m sont des nombres entiers valant de 1 à 15,
- R¹, R² et R³ représentent indépendamment un atome d'halogène ou un groupement alkyle linéaire ou ramifié en C1 à C6, et
- R⁴ représente un groupement cyano, cyanate, isocyanate, thiocyanate ou isothiocyanate.

Selon un mode de réalisation, le solvant de formule (I) est plus précisément de formule (III) : 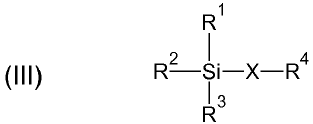 dans laquelle :
- X représente soit une liaison covalente soit un groupement alkylène linéaire ou ramifié en C1 à C6, un groupement alcénylène linéaire ou ramifié en C2 à C6, ou un groupement alcynylène linéaire ou ramifié en C2 à C6,
- R¹, R² et R³ représentent indépendamment un atome d'halogène ou un groupement alkyle linéaire ou ramifié en C1 à C6, et
- R⁴ représente un groupement cyano, cyanate, isocyanate, thiocyanate ou isothiocyanate.

Selon un mode de réalisation, le solvant de formule (I) est plus précisément de formule (IV) : 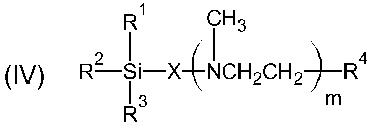 dans laquelle :
- X représente soit une liaison covalente soit un groupement alkylène linéaire ou ramifié en C1 à C6, un groupement alcénylène linéaire ou ramifié en C2 à C6, ou un groupement alcynylène linéaire ou ramifié en C2 à C6,
- m représente un nombre entier valant de 1 à 15,
- R¹, R² et R³ représentent indépendamment un atome d'halogène ou un groupement alkyle linéaire ou ramifié en C1 à C6, et
- R⁴ représente un groupement cyano, cyanate, isocyanate, thiocyanate ou isothiocyanate.

Selon un mode de réalisation, le solvant de formule (I) est plus précisément de formule (V) : 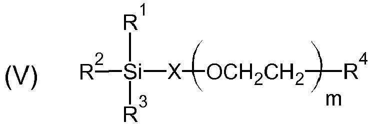 dans laquelle :
- X représente soit une liaison covalente soit un groupement alkylène linéaire ou ramifié en C1 à C6, un groupement alcénylène linéaire ou ramifié en C2 à C6, ou un groupement alcynylène linéaire ou ramifié en C2 à C6,
- m représente un nombre entier valant de 1 à 15,
- R¹, R² et R³ représentent indépendamment un atome d'halogène ou un groupement alkyle linéaire ou ramifié en C1 à C6, et
- R⁴ représente un groupement cyano, cyanate, isocyanate, thiocyanate ou isothiocyanate.

Selon un mode de réalisation, le solvant de formule (I) est plus précisément de formule (IIIa) :

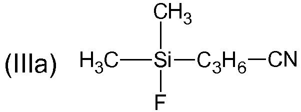

Selon un mode de réalisation, la concentration massique en sel de bis(fluorosulfonyl)imide de lithium et/ou sel de 2-trifluorométhyl-4,5-dicyano-imidazolate de lithium dans la composition est de 0,5 à 16 %.

Selon un mode de réalisation, la concentration massique en solvant de formule (I) dans la composition est de 0,5 à 5 %.

Selon un mode de réalisation, la composition comprend également au moins un solvant supplémentaire, et de préférence un mélange de deux ou trois solvants supplémentaires, choisis parmi les carbonates, les glymes, les nitriles, les dinitriles, les solvants fluorés, et les combinaisons de ceux-ci ; et la composition comprend de manière plus particulièrement préférée un mélange de carbonates, tel qu'un mélange d'éthylène carbonate et de diéthylcarbonate.

Selon un mode de réalisation, la composition comprend un autre sel de lithium, de préférence choisi parmi les sels LiPF₆, LiBF₄, CH₃COOLi, CH₃SO₃Li, CF₃SO₃Li, CF₃COOLi, Li₂B₁₂F₁₂ et LiBC₄O₈.

Selon un mode de réalisation, la concentration massique en autre sel de lithium est inférieure ou égale à 15,5 %.

L'invention a également pour objet une batterie comportant au moins une cellule qui comprend une cathode, une anode et la composition d'électrolyte décrite ci-dessus, interposée entre la cathode et l'anode.

La présente invention permet de surmonter les inconvénients de l'état de la technique. Elle fournit plus particulièrement des électrolytes conférant des performances améliorées à une batterie Li-ion, notamment en termes de de passivation de la cathode et en termes de diminution de la capacité irréversible de la batterie.

Cela est accompli grâce à l'utilisation d'un solvant de type silane en association avec un sel de lithium LiFSI ou LiTDI.

Il a été notamment découvert que l'utilisation d'un solvant de type silane en combinaison avec le LiFSI permet d'éliminer des problèmes de corrosion dus à des impuretés présentes dans le LiFSI ; et, dans le cas d'un LiFSI d'une grande pureté, d'accélérer la formation de la couche de passivation sur le métal de la cathode. Cette couche de passivation est primordiale pour le bon fonctionnement de la batterie Li-ion. En effet, sans cette couche, la capacité de la batterie Li-ion diminuerait rapidement au cours du temps d'utilisation.

Il a également été découvert que, dans le cas du LiTDI, l'ajout de solvant de type silane permet de réduire la capacité irréversible de la batterie Li-ion. La SEI, mentionnée ci-dessus, est une couche polymérique formée à l'interface électrolyte/électrode au cours du premier cycle. Cette SEI est primordiale pour le fonctionnement de la batterie et la qualité de cette SEI influence directement la durée de vie de la batterie. Avec l'utilisation d'un solvant de type silane, un gain en capacité irréversible de plusieurs pourcents peut être obtenu.

### BREVE DESCRIPTION DES FIGURES

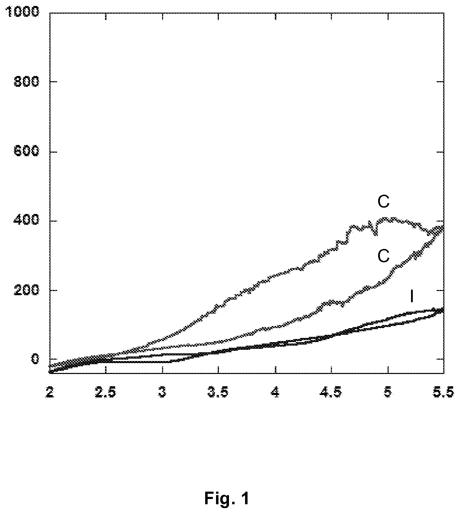

La **figure 1** représente, en référence à l'exemple 1, le courant d'oxydation (en ordonnées, en µA) en fonction du potentiel vis-à-vis du couple Li/Li⁺ (en abscisse, en V) dans une batterie Li-ion selon l'invention (courbes I) et dans une batterie Li-ion comparative (courbes C).

### DESCRIPTION DE MODES DE REALISATION DE L'INVENTION

L'invention est maintenant décrite plus en détail et de façon non limitative dans la description qui suit.

Toutes les proportions indiquées dans la demande sont des proportions massiques sauf mention contraire.

L'électrolyte de l'invention comprend un ou des sels de lithium, et un ou des solvants.

Parmi les sels de lithium figure au moins le bis(fluorosulfonyl)imide de lithium (LiFSI) ou le 2-trifluorométhyl-4,5-dicyano-imidazolate de lithium (LiTDI). On peut également utiliser un mélange de LiFSI et de LiTDI.

La teneur totale en LiFSI et LiTDI est de préférence de 0,5 à 16 % en masse par rapport à la composition totale d'électrolyte, de manière plus particulièrement préférée de 1 à 12 %, et notamment de 2 à 8 %.

D'autres sels de lithium supplémentaires peuvent également être présents. Ils peuvent notamment être choisis parmi les sels LiPF₆, LiBF₄, CH₃COOLi, CH₃SO₃Li, CF₃SO₃Li, CF₃COOLi, Li₂B₁₂F₁₂ et LiBC₄O₈.

La teneur totale en sels de lithium supplémentaires est de préférence inférieure ou égale à 16 % en masse par rapport à la composition totale, de préférence inférieure ou égale à 10 %, ou à 5 %, ou à 2 %, ou à 1 %.

De préférence, le LiFSI et/ou le LiTDI sont majoritaires, en masse, parmi les sels de lithium totaux de la composition d'électrolyte.

Selon un mode de réalisation, le seul sel de lithium présent dans l'électrolyte est le LiFSI.

Selon un mode de réalisation, le seul sel de lithium présent dans l'électrolyte est le LiTDI.

Selon un mode de réalisation, les seuls sels de lithium présents dans l'électrolyte sont le LiFSI et le LiTDI.

La concentration molaire en sels de lithium dans l'électrolyte peut aller par exemple de 0,01 à 5 mol/L, de préférence de 0,1 à 2 mol/L, plus particulièrement de 0,5 à 1,5 mol/L.

La concentration molaire en LiFSi et/ou LiTDI dans l'électrolyte peut aller par exemple de 0,01 à 5 mol/L, de préférence de 0,1 à 2 mol/L, plus particulièrement de 0,3 à 1,5 mol/L.

L'électrolyte comprend un ou plusieurs solvants. Il comprend au moins un solvant silane, et de préférence également un ou plusieurs solvants qui peuvent être notamment des carbonates organiques, des glymes, des nitriles et/ou des solvants fluorés.

Les carbonates organiques peuvent être notamment choisis parmi l'éthylène carbonate, le diméthylcarbonate, l'éthylméthylcarbonate, le diéthylcarbonate, le propylène carbonate et les combinaisons de ceux-ci.

Les glymes peuvent être notamment choisis parmi l'éthylène glycol diméthyléther, le diéthylène glycol diméthyléther, le dipropylène glycol diméthyléther, le diéthylène glycol diéthyléther, le triéthylène glycol diméthyléther, le diéthylène glycol dibutyléther, le tétraéthylène glycol diméthyléther, le diéthylène glycol t-butylméthyléther et les combinaisons de ceux-ci.

Les nitriles (incluant des composés dinitriles) peuvent être notamment choisis parmi l'acétonitrile, le méthoxypropionitrile, le propionitrile, le butyronitrile, l'isobutyronitrile, le valéronitrile, le malononitrile, le succinonitrile, le glutaronitrile et les combinaisons de ceux-ci.

Les solvants fluorés peuvent être des composés carbonates, glymes ou nitriles décrits ci-dessus, auxquels au moins un atome d'hydrogène a été substitué par au moins un atome de fluor.

On peut notamment utiliser dans la composition d'électrolyte un mélange d'éthylène carbonate et de diéthylcarbonate, dans un rapport volumétrique allant de préférence de 0,1 à 2, de manière plus particulièrement préférée de 0,2 à 1, et en particulier de 0,3 à 0,5.

Le solvant silane répond à la formule générale (I) :

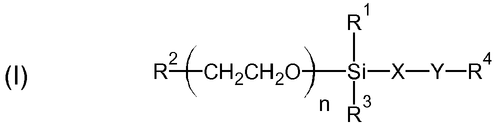

Dans cette formule :
- n est un nombre entier valant de 0 à 15,
- R¹, R² et R³ représentent indépendamment un atome d'halogène ou un groupement alkyle linéaire ou ramifié en C1 à C6,
- X représente soit une liaison covalente soit un groupement alkylène linéaire ou ramifié en C1 à C6, un groupement alcénylène linéaire ou ramifié en C2 à C6, ou un groupement alcynylène linéaire ou ramifié en C2 à C6,
- Y représente soit un groupement -(OCH₂CH₂)ₘ-, soit un groupement -(N(CH₃)CH₂CH₂)ₘ-, dans lequel m est un entier valant de 0 à 15, sous réserve que m soit différent de 0 lorsque X représente une liaison covalente, et
- R⁴ représente un groupement cyano, cyanate, isocyanate, thiocyanate ou isothiocyanate.

De préférence, n vaut de 0 à 10, ou de 0 à 5, ou de 0 à 2, ou de 0 à 1. De manière plus particulièrement préférée, n vaut 0 (c'est-à-dire que R² est relié à l'atome Si par une simple liaison covalente).

De préférence, R¹, R² et R³ représentent indépendamment F ou CH₃.

De préférence, X représente un groupe alkylène en C1 à C4, et de manière plus particulièrement préférée en C2 ou en C3.

De préférence, m vaut de 0 à 10, ou de 0 à 5, ou de 0 à 2. De manière plus particulièrement préférée, Y représente une liaison covalente (c'est-à-dire que m=0).

De préférence, R⁴ représente un groupement cyano (-CN).

Au sein de la formule générale (I), le solvant silane peut présenter l'une des formules plus particulières (II) ou (III) ou (IV) ou (V) ci-dessous :

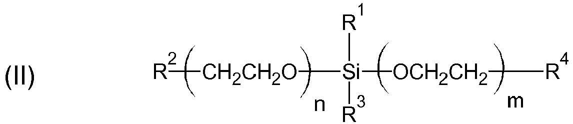

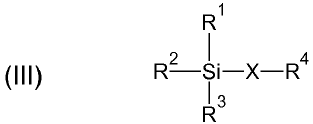

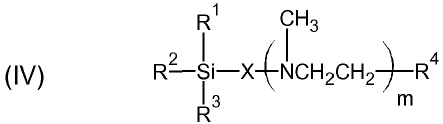

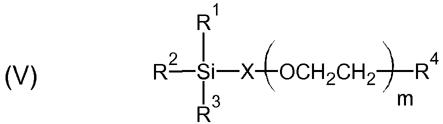

Dans ces formules (II) à (V), n, m, R¹, R², R³ et R⁴ ont les mêmes significations (et les mêmes significations préférées) que ci-dessus.

De préférence, dans ces formules (II) à (V), n est supérieur ou égal à 1 et m est supérieur ou égal à 1.

Des composés préférés pour le solvant silane sont :
- le 4-(triméthylsilyl)butanenitrile ;
- le 4-(fluorodiméthylsilyl)butanenitrile ;
- le 4-(difluorométhylsilyl)butanenitrile ;
- le 4-(trifluorosilyl)butanenitrile ;
- le 3-(triméthylsilyl)butanenitrile ;
- le 3-(fluorodiméthylsilyl)butanenitrile ;
- le 3-(difluorométhylsilyl)butanenitrile ;
- le 3-(trifluorosilyl)butanenitrile ;
- le 3-(triméthylsilyl)propanenitrile ;
- le 3-(fluorodiméthylsilyl)propanenitrile ;
- le 3-(difluorométhylsilyl)propanenitrile ; et
- le 3-(trifluorosilyl)propanenitrile.

Le 4-(fluorodiméthylsilyl)butanenitrile est tout particulièrement préféré. Ce composé répond à la formule (IIIa) :

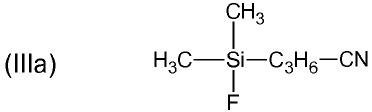

Des combinaisons de deux ou plus des solvants silanes ci-dessus peuvent être utilisées.

Les solvants silanes ci-dessus peuvent être fabriqués comme décrit dans le document US 2014/0356735.

Le solvant silane est de préférence employé en combinaison avec un autre solvant, par exemple un mélange de carbonates organiques. De préférence, l'autre solvant est majoritaire en volume par rapport au solvant silane.

Le solvant silane peut par exemple représenter de 0,5 à 5 % en masse par rapport au total de la composition, notamment de 1 à 4 % en masse.

Une batterie ou accumulateur selon l'invention comporte au moins une cathode, une anode, et un électrolyte interposé entre la cathode et l'anode.

Les termes de cathode et d'anode sont donnés en référence au mode de décharge de la batterie.

Selon un mode de réalisation, la batterie présente plusieurs cellules, qui comportent chacune une cathode, une anode, et un électrolyte interposé entre la cathode et l'anode. Dans ce cas, de préférence, l'ensemble des cellules sont telles que décrites ci-dessus dans le résumé de l'invention. Par ailleurs, l'invention porte également sur une cellule individuelle comportant une cathode, une anode et un électrolyte, la cathode et l'électrolyte étant tels que décrits ci-dessus dans le résumé de l'invention.

La cathode comporte une matière active. Par « *matière active* » on entend un matériau dans lequel les ions lithium issus de l'électrolyte sont susceptibles de s'insérer, et duquel les ions lithium sont capables d'être libérés dans l'électrolyte.

Outre la matière active, la cathode peut comporter avantageusement :
- un additif conducteur électronique ; et/ou
- un liant polymère.

La cathode peut être sous la forme d'un matériau composite comportant la matière active, le liant polymère et l'additif conducteur électronique.

L'additif conducteur électronique peut être par exemple une forme allotropique du carbone. Comme conducteur électronique, on peut notamment citer le noir de carbone, le carbone SP, les nanotubes de carbone et les fibres de carbone.

Le liant polymère peut être par exemple un polymère fluoré fonctionnalisé ou non, tel que le poly(difluorovinyle), ou un polymère à base aqueuse, par exemple la carboxyméthylcellulose ou un latex styrène-butadiène.

La cathode peut comporter un collecteur de courant métallique, sur lequel le matériau composite est déposé. Ce collecteur de courant peut notamment être fabriqué en aluminium.

La fabrication de la cathode peut être réalisée comme suit. Tous les composés cités précédemment sont mis en solution dans un solvant organique ou aqueux pour former une encre. L'encre est homogénéisée, par exemple à l'aide d'un ultra thurax. Cette encre est ensuite laminée sur le collecteur de courant, le solvant est éliminé par séchage.

L'anode peut par exemple comporter du lithium métallique, du graphite, du carbone, des fibres de carbone, un alliage Li₄Ti₅O₁₂ ou une combinaison de ceux-ci. La composition et le mode de préparation sont similaires à ceux de la cathode, à l'exception de la matière active.

### EXEMPLES

Les exemples suivants illustrent l'invention sans la limiter.

### Exemple 1 - électrolyte à base de LiFSI

On fabrique un électrolyte selon l'invention en dissolvant à température ambiante du LiFSI à une concentration de 1 mol/L dans un mélange d'éthylène carbonate et de diéthylcarbonate en proportions volumétriques respectives de 3 et 7. A ce mélange, le solvant de formule (IIIa) ci-dessus est ajouté dans une proportion massique de 2 % par rapport au poids total de l'électrolyte. Un deuxième électrolyte (comparatif) est réalisé de la manière mais sans le solvant de formule (IIIa).

La passivation de l'aluminium de ces deux électrolytes est étudiée dans une pile bouton du CR2032, avec une feuille d'aluminium à la cathode et du lithium métal comme référence à l'anode. Un séparateur en fibre de verre est imbibé par l'électrolyte étudié. Un balayage en tension entre 2 et 5.5 V est appliqué sur la pile bouton avec une vitesse de balayage de 0.1 mV/s et l'on détecte le courant d'oxydation. La **figure 1** illustre l'effet de l'ajout du solvant silane sur la corrosion de l'aluminium. On constate que le solvant silane réduit la corrosion de l'aluminium.

### Exemple 2 - électrolyte à base de LiTDI

On fabrique un électrolyte selon l'invention en dissolvant à température ambiante du LiTDI à une concentration de 1 mol/L dans un mélange d'éthylène carbonate et de diéthylcarbonate en proportions volumétriques respectives de 3 et 7. A ce mélange, le solvant de formule (IIIa) ci-dessus est ajouté dans une proportion massique de 2 % par rapport au poids total de l'électrolyte. Un deuxième électrolyte (comparatif) est réalisé de la manière mais sans le solvant de formule (IIIa).

La formation de la SEI de ces deux électrolytes est étudiée dans une pile bouton du CR2032 avec une électrode de graphite déposé sur du cuivre à la cathode, et du lithium métal comme référence à l'anode. Un séparateur en fibre de verre est imbibé par l'électrolyte étudié. Chaque pile bouton subit deux phases de charge-décharge à un régime de C/24 (c'est-à-dire une charge ou décharge en 24 heures). Pour cela, un courant négatif est appliqué lors de la charge, et un courant positif est appliqué lors de la décharge. La capacité irréversible est déterminée en faisant la différence de capacité entre la première et la seconde charge. Cette capacité irréversible vaut :
- 21 % avec l'électrolyte comparatif sans solvant silane ; et
- 15 % avec l'électrolyte de l'invention avec solvant silane.

Par conséquent, la capacité de la batterie Li-ion est augmentée de 6% grâce à l'ajout du solvant silane dans l'électrolyte.

## Revendications

1. Composition d'électrolyte, comprenant :
- un sel de bis(fluorosulfonyl)imide de lithium et/ou un sel de 2-trifluorométhyl-4,5-dicyano-imidazolate de lithium ; et
- un solvant de formule (I) : 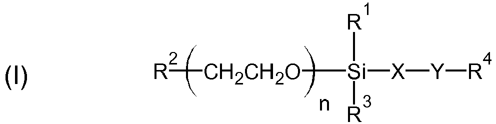 dans laquelle :
- n est un nombre entier valant de 0 à 15,
- R¹, R² et R³ représentent indépendamment un atome d'halogène ou un groupement alkyle linéaire ou ramifié en C1 à C6,
- X représente soit une liaison covalente soit un groupement alkylène linéaire ou ramifié en C1 à C6, un groupement alcénylène linéaire ou ramifié en C2 à C6, ou un groupement alcynylène linéaire ou ramifié en C2 à C6,
- Y représente soit un groupement -(OCH₂CH₂)ₘ-, soit un groupement -(N(CH₃)CH₂CH₂)ₘ-, m étant un entier valant de 0 à 15, sous réserve que m soit différent de 0 lorsque X représente une liaison covalente, et
- R⁴ représente un groupement cyano, cyanate, isocyanate, thiocyanate ou isothiocyanate.

2. Composition selon la revendication 1, dans laquelle le solvant de formule (I) est plus précisément de formule (II) : 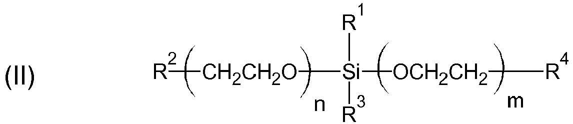 dans laquelle :
- n et m sont des nombres entiers valant de 1 à 15,
- R¹, R² et R³ représentent indépendamment un atome d'halogène ou un groupement alkyle linéaire ou ramifié en C1 à C6, et
- R⁴ représente un groupement cyano, cyanate, isocyanate, thiocyanate ou isothiocyanate.

3. Composition selon la revendication 1, dans laquelle le solvant de formule (I) est plus précisément de formule (III) : 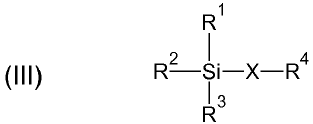 dans laquelle :
- X représente soit une liaison covalente soit un groupement alkylène linéaire ou ramifié en C1 à C6, un groupement alcénylène linéaire ou ramifié en C2 à C6, ou un groupement alcynylène linéaire ou ramifié en C2 à C6,
- R¹, R² et R³ représentent indépendamment un atome d'halogène ou un groupement alkyle linéaire ou ramifié en C1 à C6, et
- R⁴ représente un groupement cyano, cyanate, isocyanate, thiocyanate ou isothiocyanate.

4. Composition selon la revendication 1, dans laquelle le solvant de formule (I) est plus précisément de formule (IV) : 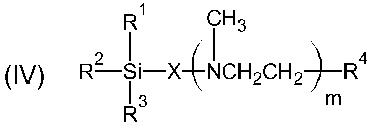 dans laquelle :
- X représente soit une liaison covalente soit un groupement alkylène linéaire ou ramifié en C1 à C6, un groupement alcénylène linéaire ou ramifié en C2 à C6, ou un groupement alcynylène linéaire ou ramifié en C2 à C6,
- m représente un nombre entier valant de 1 à 15,
- R¹, R² et R³ représentent indépendamment un atome d'halogène ou un groupement alkyle linéaire ou ramifié en C1 à C6, et
- R⁴ représente un groupement cyano, cyanate, isocyanate, thiocyanate ou isothiocyanate.

5. Composition selon la revendication 1, dans laquelle le solvant de formule (I) est plus précisément de formule (V) : 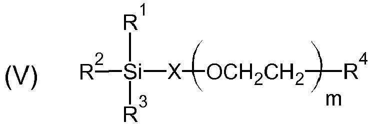 dans laquelle :
- X représente soit une liaison covalente soit un groupement alkylène linéaire ou ramifié en C1 à C6, un groupement alcénylène linéaire ou ramifié en C2 à C6, ou un groupement alcynylène linéaire ou ramifié en C2 à C6,
- m représente un nombre entier valant de 1 à 15,
- R¹, R² et R³ représentent indépendamment un atome d'halogène ou un groupement alkyle linéaire ou ramifié en C1 à C6, et
- R⁴ représente un groupement cyano, cyanate, isocyanate, thiocyanate ou isothiocyanate.

6. Composition selon la revendication 1, dans laquelle le solvant de formule (I) est plus précisément de formule (IIIa) :

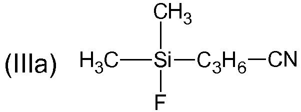

7. Composition selon l'une des revendications 1 à 6, dans laquelle la concentration massique en sel de bis(fluorosulfonyl)imide de lithium et/ou sel de 2-trifluorométhyl-4,5-dicyano-imidazolate de lithium dans la composition est de 0,5 à 16 %.

8. Composition selon l'une des revendications 1 à 7, dans laquelle la concentration massique en solvant de formule (I) dans la composition est de 0,5 à 5 %.

9. Composition selon l'une des revendications 1 à 8, comprenant également au moins un solvant supplémentaire, et de préférence un mélange de deux ou trois solvants supplémentaires, choisis parmi les carbonates, les glymes, les nitriles, les dinitriles, les solvants fluorés, et les combinaisons de ceux-ci ; la composition comprenant de manière plus particulièrement préférée un mélange de carbonates, tel qu'un mélange d'éthylène carbonate et de diéthylcarbonate.

10. Composition selon l'une des revendications 1 à 9, comprenant un autre sel de lithium, de préférence choisi parmi les sels LiPF₆, LiBF₄, CH₃COOLi, CH₃SO₃Li, CF₃SO₃Li, CF₃COOLi, Li₂B₁₂F₁₂ et LiBC₄O₈.

11. Composition selon l'une des revendications 1 à 10, dans laquelle la concentration massique en autre sel de lithium est inférieure ou égale à 15,5 %.

12. Batterie comportant au moins une cellule qui comprend une cathode, une anode et la composition d'électrolyte selon l'une des revendications 1 à 11, interposée entre la cathode et l'anode.

## Patentansprüche

1. Elektrolytzusammensetzung, umfassend:
- ein Lithiumbis(fluorsulfonyl)imid-Salz und/oder ein Lithium-2-trifluormethyl-4,5-dicyano-imidazolat-Salz; und
- ein Lösungsmittel der Formel (I): 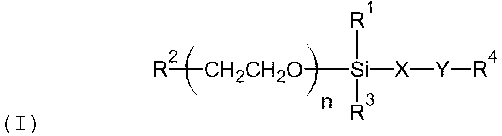 in der:
- n für eine ganze Zahl mit einem Wert von 0 bis 15 steht,
- R¹, R² und R³ unabhängig für ein Halogenatom oder eine lineare oder verzweigte C₁- bis C₆-Alkylgruppe stehen,
- X entweder für eine kovalente Bindung oder für eine lineare oder verzweigte C₁- bis C₆-Alkylengruppe, eine lineare oder verzweigte C₂-bis C₆-Alkenylengruppe oder eine lineare oder verzweigte C₂- bis C₆-Alkinylengruppe steht,
- Y entweder für eine -(OCH₂CH₂)ₘ-Gruppe oder für eine - (N(CH₃)CH₂CH₂)ₘ-Gruppe steht, wobei m für eine ganze Zahl mit einem Wert von 0 bis 15 steht, mit der Maßgabe, dass m von 0 verschieden ist, wenn X für eine kovalente Bindung steht, und
- R⁴ für eine Cyano-, Cyanat-, Isocyanat-, Thiocyanat- oder Isothiocyanatgruppe steht.

2. Verbindung nach Anspruch 1, wobei das Lösungsmittel der Formel (I) genauer die Formel (II) aufweist: 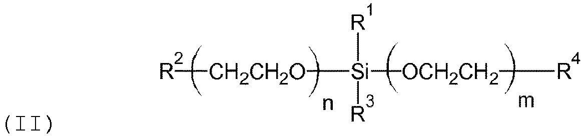 in der:
- n und m für eine ganze Zahl mit einem Wert von 1 bis 15 stehen,
- R¹, R² und R³ unabhängig für ein Halogenatom oder eine lineare oder verzweigte C₁- bis C₆-Alkylgruppe stehen und
- R⁴ für eine Cyano-, Cyanat-, Isocyanat-, Thiocyanat- oder Isothiocyanatgruppe steht.

3. Verbindung nach Anspruch 1, wobei das Lösungsmittel der Formel (I) genauer die Formel (III) aufweist: 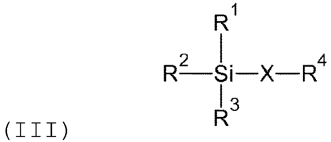 in der:
- X entweder für eine kovalente Bindung oder für eine lineare oder verzweigte C₁- bis C₆-Alkylengruppe, eine lineare oder verzweigte C₂-bis C₆-Alkenylengruppe oder eine lineare oder verzweigte C₂- bis C₆-Alkinylengruppe steht,
- R¹, R² und R³ unabhängig für ein Halogenatom oder eine lineare oder verzweigte C₁- bis C₆-Alkylgruppe stehen und
- R⁴ für eine Cyano-, Cyanat-, Isocyanat-, Thiocyanat- oder Isothiocyanatgruppe steht.

4. Verbindung nach Anspruch 1, wobei das Lösungsmittel der Formel (I) genauer die Formel (IV) aufweist: 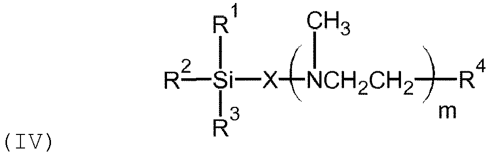 in der:
- X entweder für eine kovalente Bindung oder für eine lineare oder verzweigte C₁- bis C₆-Alkylengruppe, eine lineare oder verzweigte C₂-bis C₆-Alkenylengruppe oder eine lineare oder verzweigte C₂- bis C₆-Alkinylengruppe steht,
- m für eine ganze Zahl mit einem Wert von 1 bis 15 steht,
- R¹, R² und R³ unabhängig für ein Halogenatom oder eine lineare oder verzweigte C₁- bis C₆-Alkylgruppe stehen und
- R⁴ für eine Cyano-, Cyanat-, Isocyanat-, Thiocyanat- oder Isothiocyanatgruppe steht.

5. Verbindung nach Anspruch 1, wobei das Lösungsmittel der Formel (I) genauer die Formel (V) aufweist: 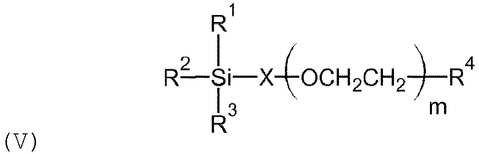 in der:
- X entweder für eine kovalente Bindung oder für eine lineare oder verzweigte C₁- bis C₆-Alkylengruppe, eine lineare oder verzweigte C₂-bis C₆-Alkenylengruppe oder eine lineare oder verzweigte C₂- bis C₆-Alkinylengruppe steht,
- m für eine ganze Zahl mit einem Wert von 1 bis 15 steht,
- R¹, R² und R³ unabhängig für ein Halogenatom oder eine lineare oder verzweigte C₁- bis C₆-Alkylgruppe stehen und
- R⁴ für eine Cyano-, Cyanat-, Isocyanat-, Thiocyanat- oder Isothiocyanatgruppe steht.

6. Verbindung nach Anspruch 1, wobei das Lösungsmittel der Formel (I) genauer die Formel (IIIa) aufweist:

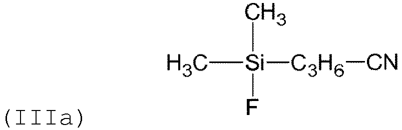

7. Zusammensetzung nach einem der Ansprüche 1 bis 6, wobei die Massenkonzentration an Lithiumbis(fluorsulfonyl)imid-Salz und/oder Lithium-2-trifluormethyl-4,5-dicyanoimidazolat-Salz in der Zusammensetzung 0,5 bis 16 % beträgt.

8. Zusammensetzung nach einem der Ansprüche 1 bis 7, wobei die Massenkonzentration an Lösungsmittel der Formel (I) in der Zusammensetzung 0,5 bis 5 % beträgt.

9. Zusammensetzung nach einem der Ansprüche 1 bis 8, außerdem umfassend mindestens ein zusätzliches Lösungsmittel und vorzugsweise eine Mischung von zwei oder drei zusätzlichen Lösungsmitteln, die aus Carbonaten, Glymen, Nitrilen, Dinitrilen, fluorierten Lösungsmitteln und Kombinationen davon ausgewählt sind; wobei die Zusammensetzung spezieller bevorzugt eine Mischung von Carbonaten, wie eine Mischung von Ethylencarbonat und Diethylcarbonat, umfasst.

10. Zusammensetzung nach einem der Ansprüche 1 bis 9, umfassend ein anderes Lithiumsalz, das vorzugsweise aus den Salzen LiPF₆, LiBF₄, CH₃COOLi, CH₃SO₃Li, CF₃SO₃Li, CF₃COOLi, Li₂B₁₂F₁₂ und LiBC₄O₈ ausgewählt ist.

11. Zusammensetzung nach einem der Ansprüche 1 bis 10, wobei die Massenkonzentration an anderem Lithiumsalz kleiner oder gleich 15,5 % ist.

12. Batterie, umfassend mindestens eine Zelle, die eine Kathode, eine Anode und die Elektrolytzusammensetzung nach einem der Ansprüche 1 bis 11 zwischen der Kathode und der Anode umfasst.

## Claims

1. Electrolyte composition comprising:
- a lithium bis(fluorosulfonyl)imide salt and/or a lithium 2-trifluoromethyl-4,5-dicyanoimidazolate salt; and
- un solvent de formula (I): 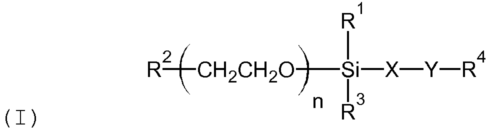 in which:
- n is an integer having a value from 0 to 15,
- R¹, R² and R³ independently represent a halogen atom or a linear or branched C₁ to C₆ alkyl group,
- X represents either a covalent bond or a linear or branched C₁ to C₆ alkylene group, a linear or branched C₂ to C₆ alkenylene group or a linear or branched C₂ to C₆ alkynylene group,
- Y represents either a -(OCH₂CH₂)ₘ-group or a - (N(CH₃)CH₂CH₂)ₘ- group, m being an integer having a value from 0 to 15, with the proviso that m is different than 0 when X represents a covalent bond, and
- R⁴ represents a cyano, cyanate, isocyanate, thiocyanate or isothiocyanate group.

2. Composition according to Claim 1, wherein the solvent of formula (I) is more specifically of formula (II) : 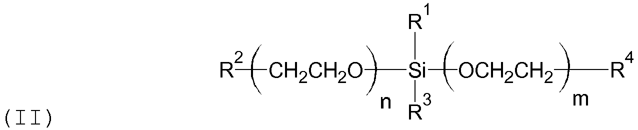 in which:
- n and m are integers having values from 1 to 15,
- R¹, R² and R³ independently represent a halogen atom or a linear or branched C₁ to C₆ alkyl group, and
- R⁴ represents a cyano, cyanate, isocyanate, thiocyanate or isothiocyanate group.

3. Composition according to Claim 1, wherein the solvent of formula (I) is more specifically of formula (III) : 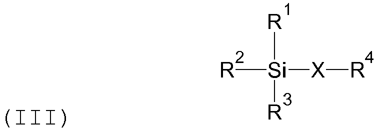 in which:
- X represents either a covalent bond or a linear or branched C₁ to C₆ alkylene group, a linear or branched C₂ to C₆ alkenylene group or a linear or branched C₂ to C₆ alkynylene group,
- R¹, R² and R³ independently represent a halogen atom or a linear or branched C₁ to C₆ alkyl group, and
- R⁴ represents a cyano, cyanate, isocyanate, thiocyanate or isothiocyanate group.

4. Composition according to Claim 1, wherein the solvent of formula (I) is more specifically of formula (IV) : 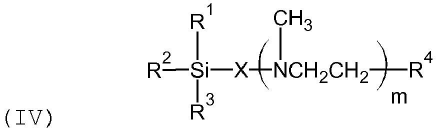 in which:
- X represents either a covalent bond or a linear or branched C₁ to C₆ alkylene group, a linear or branched C₂ to C₆ alkenylene group or a linear or branched C₂ to C₆ alkynylene group,
- m represents an integer having a value from 1 to 15,
- R¹, R² and R³ independently represent a halogen atom or a linear or branched C₁ to C₆ alkyl group, and
- R⁴ represents a cyano, cyanate, isocyanate, thiocyanate or isothiocyanate group.

5. Composition according to Claim 1, wherein the solvent of formula (I) is more specifically of formula (V) : 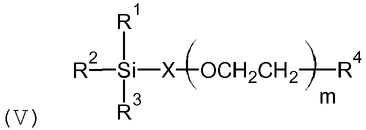 in which:
- X represents either a covalent bond or a linear or branched C₁ to C₆ alkylene group, a linear or branched C₂ to C₆ alkenylene group or a linear or branched C₂ to C₆ alkynylene group,
- m represents an integer having a value from 1 to 15,
- R¹, R² and R³ independently represent a halogen atom or a linear or branched C₁ to C₆ alkyl group, and
- R⁴ represents a cyano, cyanate, isocyanate, thiocyanate or isothiocyanate group.

6. Composition according to Claim 1, wherein the solvent of formula (I) is more specifically of formula (IIIa) :

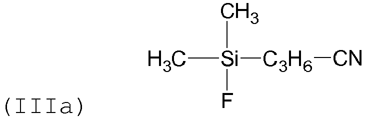

7. Composition according to one of Claims 1 to 6, wherein the concentration by weight of lithium bis(fluorosulfonyl)imide salt and/or lithium 2-trifluoromethyl-4,5-dicyanoimidazolate salt in the composition is from 0.5 to 16%.

8. Composition according to one of Claims 1 to 7, wherein the concentration by weight of solvent of formula (I) in the composition is from 0.5 to 5%.

9. Composition according to one of Claims 1 to 8, also comprising at least one additional solvent and preferably a mixture of two or three additional solvents chosen from carbonates, glymes, nitriles, dinitriles, fluorinated solvents and the combinations of these; the composition more particularly preferably comprising a mixture of carbonates, such as a mixture of ethylene carbonate and diethyl carbonate.

10. Composition according to one of Claims 1 to 9, comprising another lithium salt preferably chosen from the LiPF₆, LiBF₄, CH₃COOLi, CH₃SO₃Li, CF₃SO₃Li, CF₃COOLi, Li₂B₁₂F₁₂ and LiBC₄O₈ salts.

11. Composition according to one of Claims 1 to 10, wherein the concentration by weight of other lithium salt is less than or equal to 15.5%.

12. Battery comprising at least one cell which comprises a cathode, an anode and the electrolyte composition according to one of Claims 1 to 11, interposed between the cathode and the anode.
